# EUROPEAN PATENT SPECIFICATION

(11) **EP 1 647 353 B1**
(45) Date of publication and mention of the grant of the patent: **26.12.2007**
(21) Application number: 04077828.4
(22) Date of filing: 13.10.2004
(51) Int. Cl.: B23P 6/00, B21J 15/14, B21J 15/50, F16D 65/08

(54) **Apparatus and methods for renovating brake shoes for drum brakes**
Vorrictung und Verfahren zur Renovierung von Bremsbacken für Trommelbremsen
Dispositif et procédés pour rénover les mâchoires de frein des freins à tambour

(43) Date of publication of application: 19.04.2006
(73) Proprietor: X-Pat ApS, 1432 Copenhagen K (DK)
(72) Inventor: Kjaer, Henning, 6855 Ovtrup (DK)
(74) Representative: Elmeros, Claus

(56) References cited:
- US-A- 1 750 144
- US-A- 2 635 777
- US-A- 3 911 555
- DATABASE EPODOC EUROPEAN PATENT OFFICE, THE HAGUE, NL; XP002313324 & DK 216 790 A (ESBJERG IRAS MASKINFAB) 11 March 1992 (1992-03-11) -& DK 165 852 B (ESBJERG IRAS MASKINFAB) 25 January 1993 (1993-01-25)
- PATENT ABSTRACTS OF JAPAN vol. 018, no. 054 (M-1549), 27 January 1994 (1994-01-27) -& JP 05 277613 A (HIROYUKI ISHIKAWA; others: 01), 26 October 1993 (1993-10-26)

## Description

The present invention relates to an apparatus and methods for renovating brake shoes for drum brakes on large vehicles, preferably trucks, trailers and the like. An apparatus according to the preamble of claim 1 is disclosed in US-A-3,911,555.

When drum brakes for large vehicle, e.g. trucks, trailers, campers, and busses, wear down, the thickness of the brake lining layer upon the brake shoes is reduced. The drum brakes are considered completely worn down, when the brake lining layer is worn down to such degree, that the surface of said layer is almost in line with the top surface of rivets, which fixes the brake lining layer to the brake shoes. Presently, two possibilities exist for renewing the worn down drum brakes. The first possibility consists in completely replacing the worn brake shoe with a new brake shoe with full brake lining layer. The other possibility consists in manually renovating the worn down brake shoe by removing the worn down brake lining layer and old rivets, then cleaning and painting the stripped brake shoes, and finally applying the brake shoes with a new and full brake lining layer by riveting. The first possibility is very expensive compared to the second possibility, but on the other hand such a manual renovation is extremely time consuming and requires relatively complex tools.

Accordingly, it is the object of the present invention to provide an apparatus and methods for renovation of brake shoes for drum brakes for large vehicles in order to render such process faster, more effective and less complex for the skilled repairman to perform.

The object is achieved by an apparatus for renovating brake shoes for drum brakes on large vehicles, preferably trucks, trailers and the like, comprising at least one holding device adapted for holding a brake shoe to be renovated, moving means for moving said at least one holding device between stations, said stations comprising: a first station, at which said brake shoe may be placed in said at least one holding device; a second station, at which a new brake lining layer with new rivets may be placed on said brake shoe; a third station provided with at least one riveter, at which third station a worn down brake lining layer with old rivets may be removed from said brake shoe by de-riveting said old rivets or in which said new brake lining layer may be attached to said brake shoe by riveting said new rivets; and a fourth station, at which a de-riveted or renovated brake shoe may be removed from said apparatus.

Preferred embodiments are presented in the dependent claims.

Accordingly, renovation of worn down brake shoes from drum brakes on large vehicles has been rationalized and automated by the provision of an apparatus according to the invention, and thus the manual work load comprising the hard and rather complex labour of removing the worn down brake lining layer from a used brake shoe and riveting a new brake lining layer to the used brake shoe has been reduced. Further, brake lining layers often contain asbestos, which may be hazardous to inhale, and by providing an automated renovation process, the total health risk to repair men has been reduced significantly.

In one embodiment of the present invention said moving means comprises a rotating circular table mounted on a swivel joint having a substantially vertical swivel axis, said table being on the periphery thereof provided with at least one rail on which said at least one holding device is provided slidably adjustable in relation to the centre of the circular table.

Thus, providing an apparatus with a rotating circular table a large installation area is not required, rendering the apparatus easy for installation in repair shops or the like. Further, the provision of slidable holding devices provides for an easy adjustment of the holding device in relation to the at least one riveter, which facilitates an accurate riveting and de-riveting of the brake lining layer.

In further embodiments of the present invention said moving means is moved manually or by power means. The choice between manual or power means for movement of the moving means provides for when manual: utilizing the manual control of a skilled person of primarily the riveter or riveters, which also renders the apparatus less costly, and when power means are used: for the provision of a possibly timed servo motor, possibly timed by a processor, for the rotation of the circular table at a timely fashion, rendering all steps of the brake shoe renovation process automatic, which renders the apparatus suitable for large scale industrial use in connection with a conveyor line, e.g. for packaging of the renovated brake shoes.

In a further embodiment of the present invention said moving means further comprises a servo motor at said third station for adjustment of the position of said at least one holding device on the radius of the rotating table. Thus, further adjustment possibility for providing an accurate riveting or de-riveting of said brake shoe layer is provided.

In a further embodiment of the present invention, the apparatus is further provided with tilting means for tilting said at least one holding device for removal of a brake shoe being held thereon.

In a further embodiment of the present invention, said tilting means comprises at said fourth station a spindle motor with a double spindle moving in a substantially horizontal direction for engagement with said at least one holding device, which further comprises a tipping joint having a tipping axis substantially perpendicular to the radius of the rotating table, and a vertically extending bar for engagement with said double spindle. Accordingly, an easy removal of a renovated brake shoe from the apparatus is achieved, which removal may advantageously be coordinated with the motion of a possible conveyor being placed under the drop point of the brake shoe. Thus, a further automation of the process is achieved, increasing the production yield and reducing the renovation process time being used.

In a further embodiment of apparatus according to the present invention further comprising a housing provided with a support rail for supporting said at least one holding device during its movement between said stations. In order to provide an accurate positioning of the holding device at the third station in said apparatus, i.e. when riveting or de-riveting, the influences for the weight of the other holding devices and the processes being performed at the other stations must be kept to a minimum, which is accordingly ensured.

Firstly, the above mentioned object of the invention is achieved by a method of renovating brake shoes for drum brakes on large vehicles, preferably trucks, trailers and the like, for de-riveting a worn down brake lining layer from drum brakes, comprising the steps of: placing a brake shoe with a worn down brake lining layer in a holding device of an apparatus according to the present invention at said first station; not placing a new brake lining layer with new rivets on said brake shoe at said second station; removing said worn down brake lining layer with old rivets from said brake shoe by de-riveting at said third station; and removing a de-riveted brake shoe from said an apparatus according to the present invention at said fourth station. Thus, one full revolution of the rotating circular table in said apparatus, when performing such a method, produces a de-riveted brake shoe, which may then successively be stripped manually or automatically of the worn down brake lining layer with old rivets, or which may be conveyed on to further processing in a process line.

Secondly, the above mentioned object of the invention is further achieved by a method of renovating brake shoes for drum brakes on large vehicles, preferably trucks, trailers and the like, for riveting a new brake lining layer to drum brakes, comprising the steps of placing a brake shoe without a worn down brake lining layer with old rivets in a holding device of an apparatus according to the present invention at said first station; placing a new brake lining layer with new rivets on said brake shoe at said second station; attaching said new brake lining layer with new rivets to said brake shoe by riveting at said third station; and removing a renovated brake shoe from said apparatus according to the present invention at said fourth station. Thus, one full revolution of the rotating circular table in said apparatus, when performing such a method, produces a renovated and riveted brake shoe, which may then successively be conveyed on to further processing in a process line, e.g. to a packaging system, or be directly applied to a drum brake system in a repair shop.

Thirdly, the above mentioned object of the invention is achieved by a method of renovating brake shoes for drum brakes on large vehicles, preferably trucks, trailers and the like, comprising placing a brake shoe with a worn down brake lining layer in a holding device of an apparatus according to the present invention at said first station; not placing a new brake lining layer with new rivets on said brake shoe at said second station; removing said worn down brake lining layer with old rivets from said brake shoe by de-riveting at said third station; passing said fourth station); passing said first station; applying a new brake lining layer with new rivets at said second station; attaching said new brake lining layer with new rivets to said brake shoe by riveting at said third station; and removing a renovated brake shoe from said apparatus according to the present invention at said fourth station. Thus, two full revolutions of the rotating circular table in said apparatus, when performing such a method, produces a renovated and riveted brake shoe from a worn down brake shoe, which renovated brake shoe may then successively be conveyed on to further processing in a process line, e.g. to a packaging system, or be directly applied to a drum brake system in a repair shop.

In a further embodiment of the present invention, the method further comprises the step of providing said brake shoe with a finish at said first station. Accordingly, a resulting renovated brake shoe is also aesthetically pleasing, which makes the renovated brake shoe better sellable.

The invention is described in more detail in the following with reference to examples in the accompanying drawing, in which:

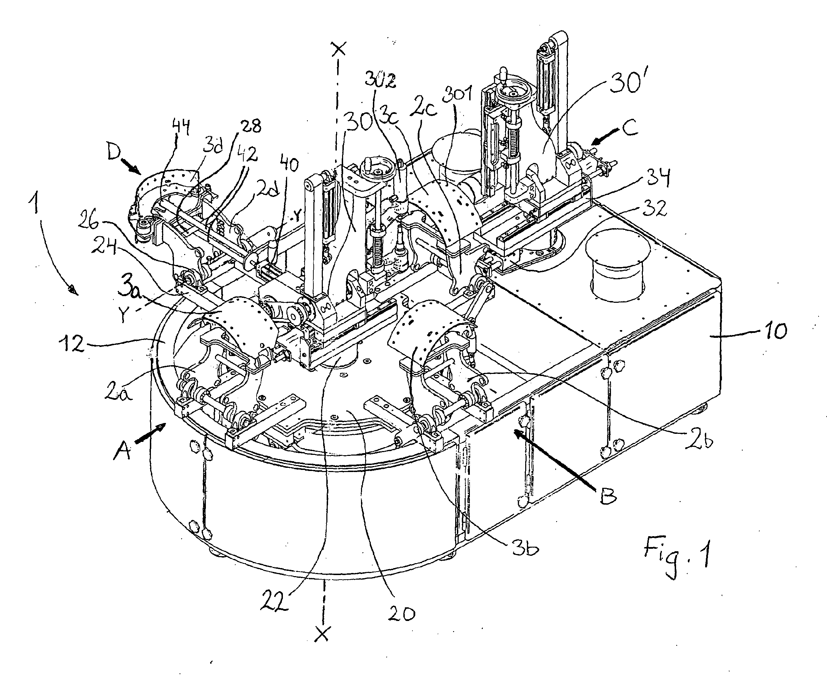

- Fig.1: shows an apparatus for renovating brake shoes from drum brakes according to a preferred embodiment of the invention.

In Fig. 1 is shown an apparatus 1 for renovating brake shoes for drum brakes on large vehicles, preferably trucks, trailers and the like, said apparatus 1 comprising a housing 10 with a support rail 12 for supporting four holding devices 2a, 2b, 2c, 2d for holding respective brake shoes 3a, 3b, 3c, 3d to be renovated at four stations A, B, C, D. The brake shoes 3a, 3b, 3c, 3d are in fig. 1 shown without any worn down or new brake lining layer for the sake of simplification. The holding devices 2a, 2b, 2c, 2d are each provided on a circular table 20, being rotatable by a swivel joint 22 upon the housing 10 around a substantially vertical swivel axis X. The holding devices 2a, 2b, 2c, 2d are each slidably provided on two substantially horizontally extending rails 24 having each one end fixed to the rotating table 20 for a function which will be explained below. The other ends of the rails 24 are able to slide upon the upper surface of the support rail 12 during rotation of said rotating table 20.

In a first part of the total brake shoe renovation process the following approach is taken:

At the first station A of the apparatus 1, a brake shoe 3a to be renovated is placed in a holding device 2a provided with a clamp (not shown) or the like, preferably a clamp functioning by friction to said brake shoe 3a. The size of the clamp and the holding device 3a is width adjustable, adapting to different sizes brake shoes 3a to be renovated. The brake shoe 3a is placed such that the surface, which faces the brake lining, is facing upwards relative to the general up-down directions on the fig. 1. In this first step of the total brake shoe renovation process, the worn down brake lining layer (not shown) is still attached to the brake shoe 3a by old rivets. Obviously, the four holding devices provided may all, some, only one, or none hold brake shoes for renovation, as is desired by the repair man or the operator of said apparatus 1.

The brake shoes 3a, 3b, 3c, 3d may be moved between stations by a clockwise rotation of the circular table 20 around the swivel axis X, said rotation being performed by the provision of a servo motor (not shown), but this may alternatively be performed by a manual action.

At the second station B of the apparatus 1, a worn down brake shoe 3b is held by the holding device 2b and no action is performed on the brake shoe 3b in this second step of the total brake shoe renovation process.

At the third station C of the apparatus 1 and in the third step of the total brake shoe renovation process, a brake shoe 3c is placed adjacent two riveters 30, 30' with rivet guns 302, one on each side of the holding device 2c, the advantages of this comprising double action as well as a possibility of compensating for the hammer action of the two riveters working in or out of phase. The function of the above mentioned rails 24 are to provide adjustment means for positioning the brake shoe 3c accurately in relation to the rivet guns 302 by movement of the holding device 3c on the radius of the rotating table 20, i.e. adjusting the distance from the swivel axis X. This movement of the holding device 2c is performed by a spindle motor 32, which pushes the holding device 2c in towards or away from the swivel axis X; when returning the spindle motor 32 to its initial position in order to move it away, when the holding device 2c moves clockwise towards station D, the return movement of the holding device 2c may be performed by a spring (not shown) or initiated by a suitable inclined surface form of the rails 24. Each riveter 30, 30', being of a conventional automatic, semi-automatic or manual type known to the person skilled in the art, is provided on two sliding rails 34 for a further possibility of adjusting the rivet guns 302 back and forth in relation to the brake shoe 3c, and is further provided with the possibility of adjustment in height as to adapt to different types of brake shoes, i.e. brake shoes of varying diameters. This ensures an accurate removal of the old rivets or de-riveting of the old rivets from the worn down brake shoe 3c in relation to rivet holes 301 provided therein. The worn down brake lining layer is by this action loosened, and may now be discarded of manually or automatically by discarding machinery (not shown), either at this third station C or at the next station D.

At the fourth station D of the apparatus 1 and in the fourth step of the total brake shoe renovation process, the de-riveted brake shoe 3d is ejected or pushed loose from the clamps of the holding device 2d, possibly onto a conveyor for further processing. At the point of affixation to the rails 24, the holding devices 2a, 2b, 2c, 2d are provided with a tipping joint 26 having a tipping axis Y substantially perpendicular to the radius of the rotating table 20. A spindle motor 40, provided at station D and slidably on a substantially vertical extending axis (not shown), ensures a tipping motion of the holding device 2d, when the ends 44 of the double spindle 42 of the motor 40 is adjacent a vertically extending bar 28 provided on the holding devices 2a, 2b, 2c, 2d. Thus by further extending the double spindle 42, the holding device 2d is tipped and finally the ends 44 of the double spindle 42 touches the underside of the brake shoe 3d, and the brake shoe 3d is gently pushed in a direction away from the swivel axis X and away from the apparatus, possibly for further processing. Alternatively, no removal of the brake shoe 2d is performed at station D, but instead the brake shoe continues directly to the second part of the total brake shoe renovation process.

The second part of the total brake shoe renovation process comprises:

In this fifth step of the total brake shoe renovation process, station A is either again passed by the brake shoe 2a, 2b, 2c, 2d to be renovated by rotation of the rotating table 20 or at station A a brake shoe 2a is manually or automatically placed in the clamp of the holding device 3a. Alternatively or additionally, at station A, a finish of the brake shoe 2a may be performed manually or automatically, often comprising cleaning and painting the brake shoe 2a for an aesthetically pleasing appearance of the brake shoe 2a, this usually being a painted metal construction.

In the sixth step of the total brake shoe renovation process, at station B, a new and not worn down brake lining layer with new rivets (neither are shown) is manually or by placement means automatically placed upon the surface of the brake shoe 3b in such a way that the new rivets are substantially pointing towards each their rivet holes 301 in the brake shoe 3b.

In the seventh step of the total brake shoe renovation process, at station C, the new brake lining layer with new rivets are attached or fixed to said brake shoe 3c by riveting by said two riveters 30, 30'. As described above, the accurate positioning of the riveting is ensured by the position adjustable rivet guns 302 of the riveters 30, 30' and the position adjustable holding device 2c.

The action of the rivet guns 302 is individually powered by respective hydraulic pump systems, and is balanced both in the hammer action, in the movement towards and away from the holding devices, and around the turning axis during de-riveting and riveting by respective balancing systems. The turning of the rivet guns 302 is needed in order to de-rivet or rivet the slightly bending surfaces of the brake shoes and is performed by two individual servo motors (not shown). The tools of a riveter are changed as required, according to whether the riveter is de-riveting or riveting. In a case, where more than two lines of rivets/rivet holes are provided in the brake shoe, the rivet guns 302 are moved a predetermined distance depending distance between said lines further towards or away from the swivelling axis for an accurate riveting or de-riveting in the rivet holes.

In the eighth step of the total brake shoe renovation process, at station D, a renovated brake shoe 3d provided with a new brake lining layer and new rivets, possibly having a finish, is produced from the apparatus 1, in a way as is described above in the fourth step of the total brake shoe renovation process.

The two parts of the total brake shoe renovation process may be performed independently of each other, or successively, either with or without removing the de-riveted brake shoe from the apparatus 1.

It has by the present invention been realized, that other possible and advantageous embodiments are conceivable within the scope of the appended claims. For example, the rotating circular table may be substituted with a chain drive, conveyor belt, or the like as moving means for the holding device, the holding device may be provided with a different design, the position, type and number of riveters may be changed, and the powering and moving means may be hydraulically, pneumatically, electrically, or manually operated. Further, the choice of reference numerals have no bearing upon the required steps or even of said steps being consecutive, this relating in particular to the stations A, B, C, and D.

## Claims

1. An apparatus (1) for renovating brake shoes for drum brakes on large vehicles, preferably trucks, trailers and the like, comprising
- at least one holding device (2a, 2b, 2c, 2d) adapted for holding a brake shoe (3a, 3b, 3c, 3d) to be renovated,
- moving means (20, 22, 24, 32) for moving said at least one holding device between stations, **characterized in that** said stations comprise:
- a first station (A), at which said brake shoe may be placed in said at least one holding device;
- a second station (B), at which a new brake lining layer with new rivets may be placed on said brake shoe;
- a third station (C) provided with at least one riveter (30, 30'), at which third station a worn down brake lining layer with old rivets may be removed from said brake shoe by de-riveting said old rivets or in which said new brake lining layer may be attached to said brake shoe by riveting said new rivets; and
- a fourth station (D), at which a de-riveted or renovated brake shoe may be removed from said apparatus.

2. An apparatus according to claim 1, where said moving means comprises
- a rotating circular table (20) mounted on a swivel joint (22) having a substantially vertical swivel axis (X), said table being on the periphery thereof provided with at least one rail (24) on which said at least one holding device (2a, 2b, 2c, 2d) is provided slidably adjustable in relation to the centre of the circular table (20).

3. An apparatus according to claim 1 or 2, where said moving means is moved manually or by power means.

4. An apparatus according to any of the claims 1 to 3, where said moving means further comprises a servo motor (32) at said third station (C) for adjustment of the position of said at least one holding device (2a, 2b, 2c, 2d) on the radius of the rotating table (20).

5. An apparatus according to any of the preceding claims, further being provided with tilting means for tilting said at least one holding device for removal of a brake shoe being held thereon.

6. An apparatus according to claim 5, said tilting means comprising at said fourth station a spindle motor (40) with a double spindle (42) moving in a substantially horizontal direction for engagement with said at least one holding device, which further comprises
- a tipping joint (26) having a tipping axis (Y) substantially perpendicular to the radius of the rotating table (20), and
- a vertically extending bar (28) for engagement with said double spindle (42).

7. An apparatus according to any of the preceding claims, further comprising a housing (10) provided with a support rail (12) for supporting said at least one holding device during its movement between said stations (A, B, C, D)

8. A method of renovating brake shoes for drum brakes on large vehicles, preferably trucks, trailers and the like, for de-riveting a worn down brake lining layer from drum brakes, comprising the steps of:
- placing a brake shoe with a worn down brake lining layer in a holding device (2a, 2b, 2c, 2d) of an apparatus according to any of the claims 1 to 7 at said first station (A);
- not placing a new brake lining layer with new rivets on said brake shoe at said second station (B);
- removing said worn down brake lining layer with old rivets from said brake shoe by de-riveting at said third station (C); and
- removing a de-riveted brake shoe in said apparatus 1 at said fourth station (D).

9. A method of renovating brake shoes for drum brakes on large vehicles, preferably trucks, trailers and the like, for riveting a new brake lining layer to drum brakes, comprising the steps of:
- placing a brake shoe without a worn down brake lining layer with old rivets in a holding device (2a, 2b, 2c, 2d) of an apparatus according to any of the claims 1 to 7 at said first station (A);
- placing a new brake lining layer with new rivets on said brake shoe at said second station (B);
- attaching said new brake lining layer with new rivets to said brake shoe by riveting at said third station (C); and
- removing a renovated brake shoe from said apparatus 1 at said fourth station (D).

10. A method of renovating brake shoes for drum brakes on large vehicles, preferably trucks, trailers and the like, comprising
- placing a brake shoe with a worn down brake lining layer in a holding device (2a, 2b, 2c, 2d) of an apparatus according to any of the claims 1 to 7 at said first station (A);
- not placing a new brake lining layer with new rivets on said brake shoe at said second station (B);
- removing said worn down brake lining layer with old rivets from said brake shoe by de-riveting at said third station (C);
- passing said fourth station (D);
- passing said first station (A);
- placing a new brake lining layer with new rivets on said brake shoe at said second station (B);
- attaching said new brake lining layer with new rivets to said brake shoe by riveting at said third station (C); and
- removing a renovated brake shoe from said apparatus 1 at said fourth station (D).

11. A method according to any of the claims 9 to 10, further comprising the step of:
- providing said brake shoe with a finish at said first station (A).

## Patentansprüche

1. Vorrichtung (1) zum Aufarbeiten von Bremsbacken für Trommelbremsen bei großen Fahrzeugen, vorzugsweise Lastkraftwagen, Anhängern oder dergleichen, umfassend
- wenigstens eine Haltevorrichtung (2a, 2b, 2c, 2d), die dazu ausgebildet ist, einen aufzuarbeitenden Bremsbacken (3a, 3b, 3c, 3d) zu halten,
- Bewegungsmittel (20, 22, 24, 32) zum Bewegen der wenigstens einen Haltevorrichtung zwischen verschiedenen Stationen,
**dadurch gekennzeichnet, daß** die Stationen umfassen:
- eine erste Station (A), bei welcher der Bremsbacken in der wenigstens einen Haltevorrichtung plaziert werden kann,
- eine zweite Station (B), bei welcher eine neue Bremsbelagsschicht mit neuen Nieten auf dem Bremsbacken plaziert werden kann,
- eine dritte Station (C), die mit wenigstens einer Nietvorrichtung (30, 30') ausgestattet ist, wobei an der dritten Station eine verschlissene Bremsbelagsschicht mit alten Nieten von dem Bremsbacken durch Entnieten der alten Nieten entfernt werden kann oder an der die neue Bremsbelagsschicht an dem Bremsbacken durch Vernieten der neuen Nieten befestigt werden kann, und
- eine vierte Station (D), bei welcher ein entnieteter oder aufgearbeiteter Bremsbacken aus der Vorrichtung entfernt werden kann.

2. Vorrichtung nach Anspruch 1, wobei die Bewegungsmittel umfassen
- einen sich drehenden kreisförmigen Tisch (20), der auf einem Drehgelenk (22) mit einer im wesentlichen vertikalen Drehachse (X) montiert ist, wobei der Tisch in seinem Randbereich mit wenigstens einer Schiene (24) versehen ist, auf welcher die wenigstens eine Haltevorrichtung (2a, 2b, 2c, 2d) verstellbar relativ zu dem Mittelpunkt des kreisförmigen Tisches (20) verschieblich vorgesehen ist.

3. Vorrichtung nach Anspruch 1 oder 2, wobei die Bewegungsmittel manuell oder motorisch bewegt werden.

4. Vorrichtung nach einem der Ansprüche 1 bis 3, wobei die Bewegungsmittel ferner einen Servomotor (32) an der dritten Station (C) zum Einstellen der Position der wenigstens einen Haltevorrichtung (2a, 2b, 2c, 2d) auf dem Radius des drehenden Tisches (20) umfassen.

5. Vorrichtung nach einem der vorangehenden Ansprüche, ferner versehen mit Kippmitteln zum Kippen der wenigstens einen Haltevorrichtung zum Entfernen eines darauf gehaltenen Bremsbackens.

6. Vorrichtung nach Anspruch 5, wobei die Kippmittel an der vierten Station einen Spindelmotor (40) mit einer Doppelspindel (42), die sich in einer im wesentlichen horizontalen Richtung zum Ineingriffkommen mit der wenigstens einen Haltevorrichtung bewegt, welche ferner umfaßt
- ein Kippgelenk (26) mit einer zum Radius des drehenden Tisches (20) im wesentlichen rechtwinkligen Kippachse (Y) und
- einem sich vertikal erstreckenden Balken (28) zum Ineingriffkommen mit der Doppelspindel (42).

7. Vorrichtung nach einem der vorangehenden Ansprüche, ferner umfassend ein Gehäuse (10), das mit einer Stützschiene (12) zum Stützen der wenigstens einen Haltevorrichtung während ihrer Bewegung zwischen den Stationen (A, B, C, D) versehen ist.

8. Verfahren zum Aufarbeiten von Bremsbacken für Trommelbremsen bei großen Fahrzeugen, vorzugsweise Lastkraftwagen, Anhängern oder dergleichen, zum Entnieten einer verschlissenen Bremsbelagsschicht von Trommelbremsen, umfassend die Schritte des:
- Plazierens eines Bremsbackens mit einer verschlissenen Bremsbelagsschicht in einer Haltevorrichtung (2a, 2b, 2c, 2d) einer Vorrichtung nach einem der Ansprüche 1 bis 7 bei der ersten Station (A),
- Nicht-Plazierens einer neuen Bremsbelagsschicht mit neuen Nieten auf dem Bremsbacken bei der zweiten Station (B),
- Entfernens der verschlissenen Bremsbelagsschicht mit alten Nieten von dem Bremsbacken durch Entnieten bei der dritten Station (C) und
- Entfernen eines entnieteten Bremsbackens in der Vorrichtung (1) bei der vierten Station (D).

9. Verfahren zum Aufarbeiten von Bremsbacken für Trommelbremsen bei großen Fahrzeugen, vorzugsweise Lastkraftwagen, Anhängern oder dergleichen, zum Annieten einer neuen Bremsbelagsschicht an Trommelbremsen, umfassend die Schritte des:
- Plazierens eines Bremsbackens ohne eine verschlissene Bremsbelagsschicht mit alten Nieten in einer Haltevorrichtung (2a, 2b, 2c, 2d) einer Vorrichtung nach einem der Ansprüche 1 bis 7 bei der ersten Station (A),
- Plazierens einer neuen Bremsbelagsschicht mit neuen Nieten auf dem Bremsbacken bei der zweiten Station (B),
- Befestigens der neuen Bremsbelagsschicht mit neuen Nieten an dem Bremsbacken durch Vernieten bei der dritten Station (C) und
- Entfernens des aufgearbeiteten Bremsbackens aus der Vorrichtung (1) bei der vierten Station (D).

10. Verfahren zum Aufarbeiten von Bremsbacken für Trommelbremsen bei großen Fahrzeugen, vorzugsweise Lastkraftwagen, Anhängern oder dergleichen, umfassend
- Plazieren eines Bremsbackens mit einer verschlissenen Bremsbelagsschicht in einer Haltevorrichtung (2a, 2b, 2c, 2d) einer Vorrichtung nach einem der Ansprüche 1 bis 7 bei der ersten Station (A),
- Nicht-Plazieren einer neuen Bremsbelagsschicht mit neuen Nieten auf dem Bremsbacken bei der zweiten Station (B),
- Entfernen der verschlissenen Bremsbelagsschicht mit den alten Nieten von dem Bremsbacken durch Entnieten bei der dritten Station (C),
- Passieren der vierten Station (D),
- Passieren der ersten Station (A),
- Plazieren einer neuen Bremsbelagsschicht mit neuen Nieten auf dem Bremsbacken bei der zweiten Station (B),
- Befestigen der neuen Bremsbelagsschicht mit den neuen Nieten an dem Bremsbacken durch Vernieten bei der dritten Station (C) und
- Entfernen eines aufgearbeiteten Bremsbackens aus der Vorrichtung (1) bei der vierten Station (D).

11. Verfahren nach einem der Ansprüche 9 bis 10, ferner umfassend den Schritt des:
- Versehens des Bremsbackens mit einer Veredelung bei der ersten Station (A).

## Revendications

1. Appareil (1) de remise en état de mâchoires de frein pour freins à tambour sur de gros véhicules, de préférence des camions, des remorques et similaires, comprenant :
- au moins un dispositif de maintien (2a, 2b, 2c, 2d) adapté pour maintenir une mâchoire de frein (3a, 3b, 3c, 3d) à remettre en état,
- un moyen de déplacement (20, 22, 24, 32) destiné à déplacer ledit au moins un dispositif de maintien entre des postes, **caractérisé en ce que** lesdits postes comprennent :
- un premier poste (A), dans lequel ladite mâchoire de frein peut être placée dans ledit au moins un dispositif de maintien ;
- un deuxième poste (B), dans lequel une nouvelle couche de garniture de frein avec de nouveaux rivets peut être disposée sur ladite mâchoire de frein ;
- un troisième poste (C) pourvu d'au moins une riveteuse (30, 30'), dans lequel troisième poste une couche de garniture de frein usée avec de vieux rivets peut être enlevée de ladite mâchoire de frein en dérivetant lesdits vieux rivets ou dans lequel ladite nouvelle couche de garniture de frein peut être fixée sur ladite mâchoire de frein en rivetant lesdits nouveaux rivets ; et
- un quatrième poste (D), dans lequel une mâchoire de frein dérivetée ou remise en état peut être enlevée dudit appareil.

2. Appareil selon la revendication 1, dans lequel ledit moyen de déplacement comprend :
- une table circulaire rotative (20) montée sur un joint pivotant (22) ayant un axe de pivotement sensiblement vertical (X), ladite table est équipée à sa périphérie d'au moins un rail (24), sur lequel ledit au moins un dispositif de maintien (2a, 2b, 2c, 2d) peut être ajusté à coulissement par rapport au centre de la table circulaire (20).

3. Appareil selon la revendication 1 ou 2, dans lequel ledit moyen de déplacement est déplacé manuellement ou par un moyen électrique.

4. Appareil selon l'une quelconque des revendications 1 à 3, dans lequel ledit moyen de déplacement comprend en outre un servomoteur (32) dans ledit troisième poste (C) pour ajuster la position dudit au moins un dispositif de maintien (2a, 2b, 2c, 2d) sur le rayon de la table rotative (20).

5. Appareil selon l'une quelconque des revendications précédentes, qui est en outre équipé de moyens d'inclinaison pour incliner ledit au moins un dispositif de maintien afin d'enlever une mâchoire de frein qui y est maintenue.

6. Appareil selon la revendication 5, ledit moyen d'inclinaison comprenant, dans ledit quatrième poste, un moteur à broche (40) ayant une double broche (42) se déplaçant dans une direction sensiblement horizontale pour s'engager sur ledit au moins un dispositif de maintien, qui comprend en outre :
- un joint basculant (26) ayant un axe de basculement (Y) sensiblement perpendiculaire au rayon de la table rotative (20), et
- une barre (28) s'étendant verticalement destinée à s'engager avec ladite double broche (42).

7. Appareil selon l'une quelconque des revendications précédentes, comprenant en outre un boîtier (10) équipé d'un rail de support (12) destiné à supporter ledit au moins un dispositif de maintien pendant son déplacement entre lesdits postes (A, B, C, D).

8. Procédé de remise en état de mâchoires de frein pour des freins à tambour sur de gros véhicules, de préférence des camions, des remorques et similaires, destiné à dériveter une couche de garniture de frein usée de freins à tambour, comprenant les étapes consistant à :
- placer une mâchoire de frein ayant une couche de garniture de frein usée dans un dispositif de maintien (2a, 2b, 2c, 2d) d'un appareil selon l'une quelconque des revendications 1 à 7 dans ledit premier poste (A) ;
- ne pas disposer de nouvelle couche de garniture de frein avec de nouveaux rivets sur ladite mâchoire de frein dans ledit deuxième poste (B) ;
- enlever ladite couche de garniture de frein usée comportant de vieux rivets de ladite mâchoire de frein en les dérivetant dans ledit troisième poste (C) ; et
- enlever une mâchoire de frein dérivetée dans ledit dispositif 1 dans ledit quatrième poste (D).

9. Procédé de remise en état de mâchoires de frein pour freins à tambour sur de gros véhicules, de préférence des camions, des remorques et similaires, destiné à river une nouvelle couche de garniture de frein sur des freins à tambour, comprenant les étapes consistant à :
- placer une mâchoire de frein sans couche de garniture de frein usée comportant de vieux rivets dans un dispositif de maintien (2a, 2b, 2c, 2d) d'un appareil selon l'une quelconque des revendications 1 à 7 dans ledit premier poste (A) ;
- disposer une nouvelle couche de garniture de frein avec de nouveaux rivets sur ladite mâchoire de frein dans ledit deuxième poste (B) ;
- fixer ladite nouvelle couche de garniture de frein avec de nouveaux rivets sur ladite mâchoire de frein en la rivetant dans ledit troisième poste (C) ; et
- enlever une mâchoire de frein remise en état dudit appareil 1 dans ledit quatrième poste (D).

10. Procédé de remise en état de mâchoires de frein pour freins à tambour sur de gros véhicules, de préférence des camions, des remorques et similaires, consistant à
- placer une mâchoire de frein ayant une couche de garniture de frein usée dans un dispositif de maintien (2a, 2b, 2c, 2d) d'un appareil selon l'une quelconque des revendications 1 à 7 dans ledit premier poste (A) ;
- ne pas disposer de nouvelle couche de garniture de frein avec de nouveaux rivets sur ladite mâchoire de frein dans ledit deuxième poste (B) ;
- enlever ladite couche de garniture de frein usée comportant de vieux rivets de ladite mâchoire de frein en les dérivetant dans ledit troisième poste (C) ;
- passer dans ledit quatrième poste (D) ;
- passer dans ledit premier poste (A) ;
- disposer une nouvelle couche de garniture de frein avec de nouveaux rivets sur ladite mâchoire de frein dans ledit deuxième poste (B) ;
- fixer ladite nouvelle couche de garniture de frein avec de nouveaux rivets sur ladite mâchoire de frein en la rivetant dans ledit troisième poste (C) ; et
- enlever une mâchoire de frein remise en état dudit appareil 1 dans ledit quatrième poste (D).

11. Procédé selon l'une quelconque des revendications 9 à 10, comprenant en outre l'étape consistant à :
- assurer une finition à ladite mâchoire de frein dans ledit premier poste (A).
